# EUROPÄISCHE PATENTSCHRIFT

(11) **EP 1 488 574 B1**
(45) Veröffentlichungstag und Bekanntmachung des Hinweises auf die Patenterteilung: **05.08.2009**
(21) Anmeldenummer: 03720175.3
(22) Anmeldetag: 14.03.2003
(51) Int. Cl.: H04L 12/28, H04L 12/413

(54) **ADAPTIVE MODULATION UND ANDERE ERWEITERUNGEN DER PHYSIKALISCHEN SCHICHT IN MEHRFACHZUGRIFFSYSTEMEN**
ADAPTIVE MODULATION AND OTHER EXTENSIONS OF THE PHYSICAL LAYER IN MULTIPLE ACCESS SYSTEMS
MODULATION ADAPTATIVE ET AUTRES EXTENSIONS DE LA COUCHE PHYSIQUE DANS DES SYSTEMES A ACCES MULTIPLE

(30) Priorität: 28.03.2002 DE 10214117
(43) Veröffentlichungstag der Anmeldung: 22.12.2004
(73) Patentinhaber: Gigaset Communications GmbH, 81379 München (DE)
(72) Erfinder: BOLINTH, Edgar, 41189 Mönchengladbach (DE); KERN, Ralf, 46399 Bocholt (DE)
(74) Vertreter: Michalski Hüttermann & Partner Patentanwälte
(86) Internationale Anmeldenummer: PCT/DE2003/000830
(87) Internationale Veröffentlichungsnummer: WO 2003/084138

(56) Entgegenhaltungen:
- "Information technology-Telecommunications and information exchange between systems- Local and metropolian area networks-Specific requirements. Part 11: Wireless LAN Medium Access Control (MAC) and Physical Layer (PHY) Specifications. Chapter 9" ISO/IEC 8802-11 ANSI/IEEE STD 802.11, XX, XX, 1999, Seiten 70-97, XP002236335
- DRABU YASIR: "A survey of QoS techniques in 802.11" SURVEY OF QOS TECHNIQUES IN 802.11, XX, XX, Januar 1999 (1999-01), Seiten 1-11, XP002209851
- AT&T ET AL: "IEEE 802.11 QoS MAC Enhancements Joint Proposal passage" IEEE 802.11 QOS MAC ENHANCEMENTS JOINT PROPOSAL, XX, XX, 1. Mai 2000 (2000-05-01), Seiten 1-50, XP002209850
- JIM MOLLENAUER ET AL: "Polling-based PCF for Strong QoS Guarantees" IEEE 802.11-00/061, XX, XX, 1. Mai 2000 (2000-05-01), Seiten 1-22, XP002231704

## Beschreibung

Die vorliegende Erfindung betrifft ein Verfahren zum Senden von Datensignalen in einem Kommunikationssystem mit zentral oder dezentral organisiertem Zugriff auf das Übertragungsmedium unter Verwendung mehrerer Übertragungsmodi. Insbesondere betrifft die vorliegende Erfindung ein Signalisierungsschema zur adaptiven Modulation in einem CSMA/CA (Carrier Sense Multiple Access Collision Avoidance) basierten Zugriffssystem.

Ein gravierendes Problem bei der Mobilfunkübertragung ist die Frequenzselektivität der Mobilfunkkanäle. Die Frequenzselektivität, hervorgerufen durch Mehrwegeausbreitung mit großen Laufzeitdifferenzen, bewirkt starke lineare Verzerrungen des Empfangssignals, die den Einsatz aufwendiger Entzerrer oder einer Viterbi-Detektion erforderlich machen. Ein geeignetes Mittel, den Nachteilen frequenzselektiver Kanäle entgegenzuwirken, ist die sogenannte Adaptive Modulation (AM), die im Folgenden näher beschrieben wird.

Adaptive Modulation wird in OFDM-Systemen (Orthogonal Frequency Devision Multiplexing) dazu verwendet, die Nachteile frequenzselektiver Fading-Kanäle zu reduzieren. Dabei werden die Daten über einzelne Subträger übertragen.

Das Prinzip der adaptiven Modulation sei im Folgenden kurz erläutert. Der Sender überträgt über den Funkkanal Daten zu einem Empfänger. In dem Sender werden die zu sendenden Daten zunächst durch einen Codierer und Interleaver codiert und verschachtelt. Anschließend werden die Daten je nach Kanaleigenschaft mit unterschiedlicher Modulationswertigkeit moduliert. Geeignete Modulationsalphabete/verfahren hierfür sind z. B. die bekannten Amplitude/Phase-Shift-Keying-Verfahren BPSK, QPSK, 16 QAM, 64 QAM usw. mit den jeweiligen Modulationswertigkeiten 1, 2, 4 und 6. Bei hohem Signal/Rausch-Abstand ist der jeweilige Subträger mit einer hohen Bitzahl zu modulieren, während bei einem geringen Signal/RauschVerhältnis eine geringe Bitzahl genügt. Das Signal/RauschVerhältnis wird üblicherweise in dem Empfänger geschätzt und für die einzelnen Subträger in eine sogenannte Bit-Loading-Tabelle umgesetzt. Beispielsweise kann eine solche Bit-Loading-Tabelle Informationen über das Signal/Rauschverhältnis oder alternativ die angeforderte Modulationswertigkeit für jeden einzelnen Subträger enthalten. Diese Bit-Loading-Tabelle wird dem Sender übermittelt, so dass dieser einen Demultiplexer DEMUX und einen Multiplexer MUX für die Adaptive Modulation entsprechend ansteuern kann.

Der Demultiplexer DEMUX leitet den vom Interleaver erhaltenen Bit-Strom an den jeweils einer bestimmten Modulationswertigkeit zugeordneten Modulator MOD₁, ..., MODₙ₋₁, MODₙ. Dabei kann der Modulator MOD₁ beispielsweise ein BPSK-Modulator und der Modulator MODₙ ein 64 QAM-Modulator sein. Die nach der jeweiligen Modulation erhaltenen Zeiger werden dann durch den Multiplexer MUX, der ebenfalls über die Bit-Loading-Tabelle gesteuert wird, einer Inversen Fast-Fourier-Transformation IFFT unterzogen. Dort werden die Zeiger auf den jeweiligen Subträger für die Übertragung umgesetzt und anschließend auf die Trägerfrequenz hochmoduliert.

Im Empfänger läuft dieser Prozess im Wesentlichen umgekehrt ab. Zunächst werden die Daten über eine Fast-Fourier-Transformation von den einzelnen Subträgern als Zeiger gewonnen. Ein anschließender Demultiplexer DEMUX weist die Daten entsprechend der Bit-Loading-Tabelle dem geeigneten Demodulator zu. Der vom Demodulator DEMOD₁,..., DEMODₙ₋₁, DEMODₙ gewonnene Bit-Strom wird über einen Multiplexer MUX einem Deinterleaver und Kanaldecodierer zugeführt.

Wie bereits erwähnt, ist für die adaptive Modulation die gewünschte Bit-Loading-Tabelle vom Sender zum Empfänger zu übertragen. Ein wesentlicher Punkt dabei ist, dass die Bit-Loading-Tabellen typischerweise im Empfänger auf der Basis von RSSI (Radio Signal Strength Indication) und SNR (Signal to Noise/Interference Ratio) berechnet und dem Sender übermittelt werden müssen. Für ein TDD-Schema (Time Division Duplex) wird üblicherweise ein WSS-Kanal (White Sense Stationary) für einen Zeitraum, in dem die Bit-Loading-Tabelle gültig ist, angenommen.

In dem Standard IEEE 802.11a sind die Mediumzugriffssteuerung (Medium Access Control, MAC) und physikalische Charakteristika für Funk-LAN-Systeme spezifiziert. Eine Mediumzugriffssteuereinheit gemäß diesem Standard soll die Komponenten einer physikalischen Schicht abhängig von der Verfügbarkeit des Spektrums hinsichtlich ihrer Zugangsberechtigung zum Übertragungsmedium unterstützen.

Prinzipiell stehen zwei Koordinationsmöglichkeiten für den Zugriff zur Verfügung: die zentrale und die dezentrale Zugriffsfunktion. Bei der zentralen Zugriffsfunktion (Point Coordination Function, PCF) ist die Koordinationsfunktionslogik nur in einer Station beziehungsweise in einem Terminal einer Gruppe von Terminals (Basic Service Set, BSS) aktiv, solange das Netzwerk in Betrieb ist. Demgegenüber ist bei einer dezentralen Zugriffsfunktion (Distributed Coordination Function, DCF) die gleiche Koordinationsfunktionslogik in jeder Station beziehungsweise jedem Terminal der Terminalgruppe aktiv, solange das Netzwerk in Betrieb ist.

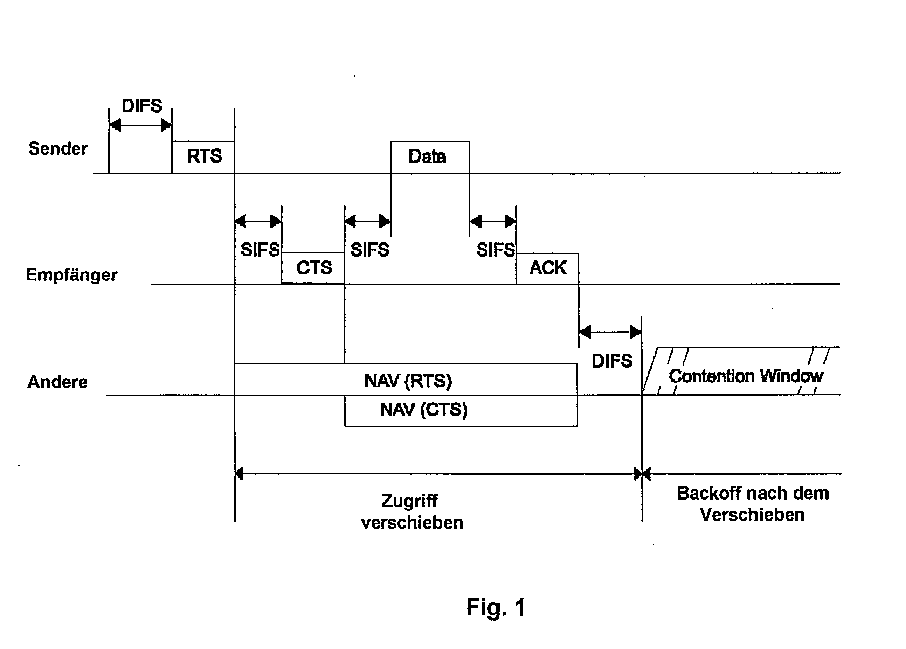

Figur 1 zeigt hierzu die Datenrahmenstruktur für den Datenaustausch eines dezentralen Zugriffssystems (DCF) nach dem Standard IEEE 802.11. Hinsichtlich der im vorliegenden Dokument verwendeten Abkürzungen und Begriffe wird auf diesen Standard verwiesen. Gemäß Figur 1 sind an der Kommunikation beteiligt: ein Sender, ein Empfänger und andere. Nach einer Wartezeit, dem sogenannten DCF Interframe Space (DIFS), überträgt der Sender an das Netz ein RTS-Signal (Ready to Send).

Nach einer kurzen Wartezeit (Short Interframe Space, SIFS) sendet der Empfänger das CTS-Signal (Clear to Send) mit dem er seine Empfangsbereitschaft andeutet. Wiederum nach einer kurzen Wartezeit SIFS schickt der Sender die zu übermittelnden Daten Data ins Netz. Nach der Übertragung und einer Wartezeit SIFS bestätigt der Empfänger den Erhalt der Daten mit der Bestätigungsnachricht ACK (Acknowledge). Die Wartezeiten SIFS und DIFS betragen dabei 16 µs beziehungsweise 34 µs.

Bei den anderen Kommunikationsteilnehmern wird auf Initiative des RTS- oder CTS-Signals der Vektor NAV (Network Allocation Vector) gesetzt, der angibt, wie lange eine Übertragung auf das Funkmedium (Wireless Medium) von der jeweiligen Station nicht durchgeführt werden kann.

Der Zugriff auf das Funksystem ist erst wieder möglich, wenn nach der Bestätigung ACK des Empfängers die Wartezeit DIFS vergangen ist. In dem anschließenden Wettbewerbsfenster, dem sogenannten "Contention Window" findet zur Kollisionsvermeidung eine Verzögerung um eine zufällige Backoff-Zeit statt.

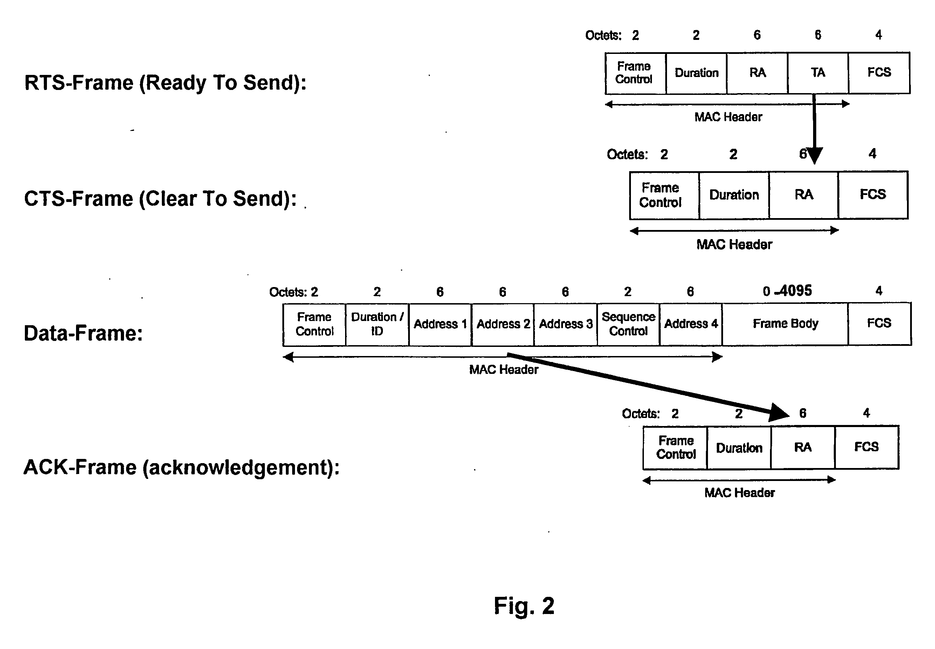

In Figur 2 sind die Frame- beziehungsweise Datenpaketformate der in Figur 1 dargestellten Frames aufgezeigt. In diesem Zusammenhang von Bedeutung ist insbesondere das Zusammenspiel zwischen Sender und Empfänger und damit die jeweilige Adressierung. So findet sich in dem RTS-Frame die Sendeadresse TA (Transmitter Address) mit sechs Oktetten kodiert wieder. Ebenso ist in dem CTS-Frame die Empfängeradresse mit sechs Oktetten kodiert. Der Data-Frame, der vom Sender abgeschickt wird, enthält in dem Adressblock "Address 2" die Zieladresse. Der vom Empfänger zur Bestätigung zurückgesandte ACK-Frame enthält wiederum die Empfängeradresse RA (Receiver Address), so dass der Sender die Bestätigung eindeutig zuordnen kann.

Die Aufgabe der vorliegenden Erfindung besteht darin, die Kanalkapazität in einem Kommunikationssystem zu erhöhen.

Zur Lösung dieser Aufgabe ist erfindungsgemäß vorgesehen ein Verfahren zum Senden von Datensignalen in einem Kommunikationssystem mit dezentral organisiertem Zugriff auf das Übertragungsmedium unter Verwendung mehrerer Übertragungsmodi, durch Senden mindestens eines Pilotsignals vom Sender zum Empfänger, Berechnen einer Zuordnungstabelle bezüglich der Übertragungsmodi anhand der empfangenen Pilotsignale durch den Empfänger, Senden der Zuordnungstabelle vom Empfänger an den Sender und Senden der Datensignale unter Anwenden eines der Übertragungsmodi gemäß der Zuordnungstabelle vom Sender zum Empfänger oder vom Empfänger zum Sender.

Ferner wird zur Lösung der obigen Aufgabe bereitgestellt ein Verfahren zum Senden von Datensignalen in einem Kommunikationssystem mit zentral organisiertem Zugriff auf das Übertragungsmedium unter Verwendung mehrerer Übertragungsmodi, durch Senden mindestens eines Pilotsignals vom Sender zum Empfänger, Berechnen einer Zuordnungstabelle bezüglich der Übertragungsmodi anhand der empfangenen Pilotsignale durch den Empfänger, Senden der Zuordnungstabelle vom Empfänger an den Sender und Senden der Datensignale unter Anwenden der in der Zuordnungtabelle übermittelten Übertragungsmodi gemäß der Zuordnungstabelle vom Empfänger zum Sender.

Somit kann adaptive Modulation auch in Mehrfachzugriffssystemen, beispielsweise dem CSMA-System (Carrier Sense Multiple Access) auf der Basis des erfindungsgemäßen Bit-Loading-Signalisierungsschemas angewendet werden. Für die adaptive Modulation ist es jedoch unbedingt erforderlich, dass die gewünschten Bit-Loading-Tabellen korrekt vom Empfänger zum Sender übertragen werden. Wenn dies nicht der Fall ist, können gravierende Störungen auftreten. Durch die Anwendung des Bit-loading-Signalisierungsschemas wird die Übertragung adaptiv modulierter Datenpakete überhaupt ermöglicht, welche durch die adaptive Modulation gegenüber Paketfehler weniger anfällig ist.

Besonders vorteilhaft lässt sich die vorgeschlagene Lösung auf ein CSMA/CA-Schema (Collision Avoidance) mit dezentralem Zugriff anwenden, bei dem die RTS-Signale (Ready to Send), CTS-Signale (Clear to Send) und NAV (Network Allocation Vector) zur Reservierung des gemeinsamen Mediums für die Datenübertragung und gegebenenfalls auch die Bestätigungsnachricht ACK (Acknowledge) zur Bestätigung des Datenempfangs verwendet werden. Damit kann auf grundlegendem Niveau adaptive Modulation für ein OFDM-System (Orthogonal Frequency Divison Multiplexing) oder ein MC/CDMA-System (Multi Carrier Code Division Multiple Access), die auf dem CSMA/CA-Zugriff basieren, angewandt werden.

Wie bereits angedeutet, lässt sich das erfindungsgemäße Verfahren sehr vorteilhaft für IEEE 802.11 standardisierte Systeme verwenden. Dabei können Piloten zur Berechnung von Bit-Loading-Tabellen in dem RTS-Signal für dezentralen Zugriff gesendet werden. Des Weiteren ist es zweckmäßig, dass der Sender in dem RTS-Signal beim Empfänger anfragt, ob er zu adaptiver Modulation und gegebenenfalls zur Durchführung zusätzlicher Funktionen im Rahmen der physikalischen Schicht, den sogenannten PHY extensions, in der Lage ist.

In ähnlicher Weise ist es vorteilhaft, wenn der Empfänger beim Sender in dem CTS-Signal nach der Durchführbarkeit von adaptiver Modulation und gegebenenfalls weiteren PHY extensions nachfragt. Gleichzeitig kann der Empfänger die aufgrund der Piloten berechnete Zuordnungstabelle beziehungsweise Bit-Loading-Tabelle in dem CTS-Signal an den Sender schicken.

Für bi-direktionalen Datenverkehr mittels adaptive Modulation von zwei Kommunikationsendgeräten ist besonders herauszustellen, dass jedes Endgerät sowohl Sender als auch Empfänger sein kann. Im Rahmen des IEEE 802.11a-Standards scheint es sinnvoll, die Bit-Loading-Tabelle mit Hilfe von drei OFDM-Datensymbolen, welche jeweils aus 24 Datenbits bestehen, zu übertragen.

Eine Bestätigung der Verwendung einer spezifischen PHY extension kann in dem CTS-Signal des Empfängers erfolgen.

Sowohl im Falle des zentralen als auch im Falle des dezentralen Zugriffs sollte die Datenübertragung mit einem festen Modulationsschema erfolgen, solange keine aktuelle Bit-Loading-Tabelle beim Sender beziehungsweise Empfänger vorliegt.

Beide Systeme, das System mit dem dezentralen und das System mit dem zentralen Zugriff, können zeitlich ineinander geschachtelt werden, so dass die jeweils spezifischen Komponenten parallel nebeneinander verwendet werden können.

Die vorliegende Erfindung wird nun anhand der beigefügten Zeichnungen näher erläutert, in denen zeigen:
- Figur 1: ein Signalisierungsschema eines DCF-Datenaustauschs (Distributed Coordination Function) gemäß dem Standard IEEE 802.11;
- Figur 2: die Datenpaketstruktur für den Datenaustausch nach Figur 1;
- Figur 3: ein erfindungsgemäßes Datenaustauschschema für Bit-Loading-Tabellen in Übertragungssystemen mit dezentralem Zugriff;
- Figur 4: einen Ausschnitt aus dem Signalisierungsschema von Figur 3;
- Figur 5: ein erfindungsgemäßes Signalisierungsschema für Bit-Loading-Tabellen in einem Übertragungssystem mit zentralem Zugriff;
- Figur 6: eine Variante des Signalisierungsschemas von Figur 5;
- Figur 7: einen Datenpaketrahmen mit enthaltener Bit-Loading-Tabelle; und
- Figur 8: die zeitliche Beziehung von Zeitintervallen, den sogenannten Interframe Spaces (IFS), zwischen den Datenblöcken und der Backoff-Prozedur bei zentralem und dezentralem Zugriffsverfahren.

Die nachfolgend beschriebenen Ausführungsbeispiele stellen bevorzugte Ausführungsformen der vorliegenden Erfindung dar.

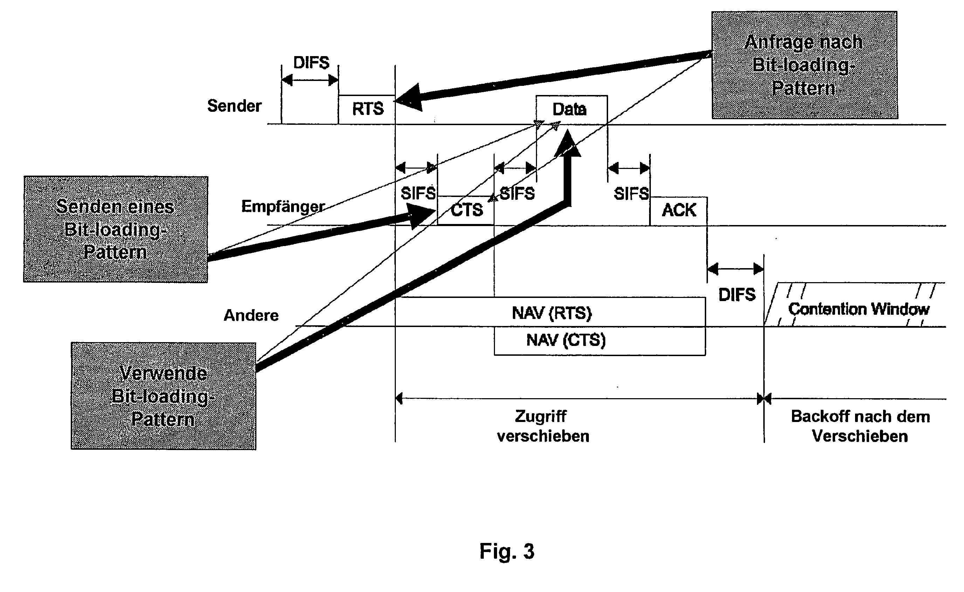

Das in Figur 3 dargestellte erfindungsgemäße Signalisierungsschema entspricht in den Grundzügen dem von Figur 1 und basiert damit auf dem Standard IEEE 802.11. Wie die dicken Pfeile in der Figur andeuten, wurde der Inhalt des jeweiligen Datenrahmens jedoch geändert. Für die Durchführung der adaptiven Modulation erfolgt in dem RTS-Signal des Senders eine Anfrage nach einer Bit-Loading-Tabelle des Empfängers. Der Empfänger wiederum integriert in seine CTS-Nachricht die Bit-Loading-Tabelle, die er anhand von Piloten des RTS-Signals berechnet hat. Die vom Sender in der CTS-Nachricht empfangene Bit-Loading-Tabelle wendet dieser zum Senden der Daten in dem Datenpaket "Data" an.

Durch die dünnen Pfeile in Figur 3 wird ein zweites Signalisierungsschema angedeutet. Demnach bittet der Empfänger in der CTS-Nachricht um eine Bit-Loading-Tabelle vom Sender. Dieser berechnet eine aktuelle Bit-Loading-Tabelle für den Vorwärtskanal anhand von Piloten aus dem CTS-Signal und integriert diese Bit-Loading-Tabelle in das an den Empfänger zu sendende Datenpaket "Data". Gleichzeitig werden die in dem Datenpaket "Data" zu übermittelnden Daten bereits gemäß der ermittelten Bit-Loading-Tabelle adaptiv moduliert.

Im zeitlichen Duplexbetrieb ist ein bestimmtes Endgerät jeweils entweder Sender oder Empfänger. In beiden obigen Fällen (dicke und dünne Pfeile in Fig. 3) werden die notwendigen Sender- und Empfängerfunktionalität in beide kommunizierenden Endgeräte implementiert.

Ein Vergleich mit Figur 1 zeigt, dass die Warteperioden SIFS und DIFS unverändert sind.

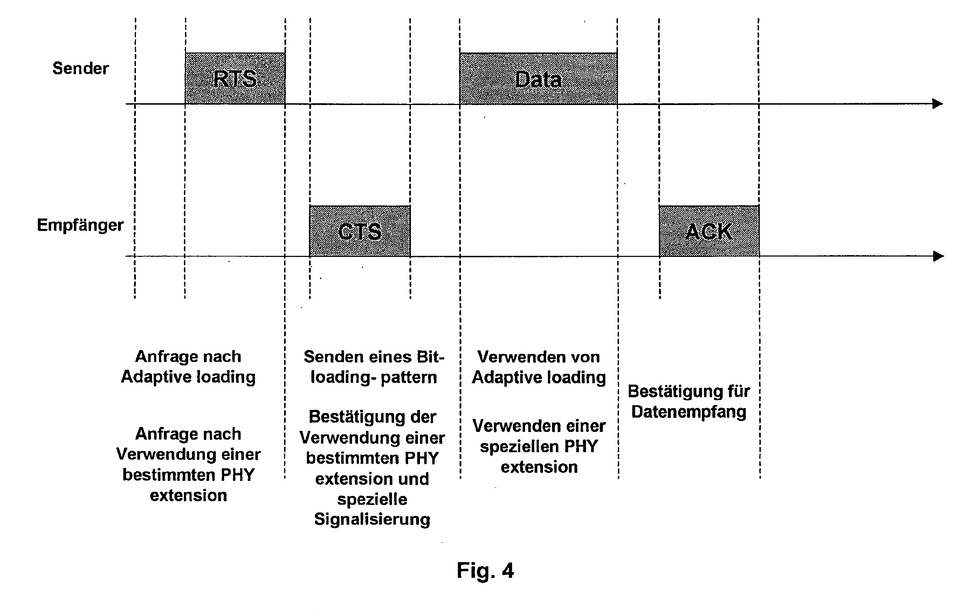

In dem Signalisierungsschema von Figur 4 sind die wesentlichen erfindungsgemäßen Schritte für den dezentralen Zugriff in einem CSMA/CA-System zusammengefasst und ergänzt. So enthält das RTS-Datenpaket vom Sender eine Anfrage nach adaptiver Modulation und darüber hinaus gegebenenfalls eine Anfrage nach Verwendung spezifischer Erweiterungsfunktionen bezüglich der physikalischen Schicht (PHY extensions). Durch derartige PHY extensions lassen sich Übertragungsmodi definieren, die über die in dem HIPERLAN/2-Standard definierten "Physical-Layer-Modes" hinausgehen. Ein Beispiel hierfür wäre das bekannte "Space-Frequency-Block-Coding".

Derartige Erweiterungen der Physikalischen Schicht können mittels der Zuordnungstabelle der jeweiligen Gegenstelle d.h Sender bzw. Empfänger bekannt gegeben werden und es kann eine spezifische Erweiterung zwischen den beiden Terminals ausgehandelt werden, die dann während der Datenübertragung angewendet wird. Dabei kann die Zuordnungstabelle eine sogenannte "Bitloading table" enthalten, die für die Adaptive Modulation Anwendung findet. Das "Aushandeln" erfolgt im Wesentlichen in drei Schritten: Im ersten Schritt gibt das erste Terminal bekannt, welche Erweiterungen es unterstützt. Im zweiten Schritt gibt das zweite Terminal bekannt, welche Erweiterungen es unterstützt. Im dritten Schritt entscheidet sich das erste Terminal für eine oder mehrere gemeinsam unterstützte Erweiterungen, die für die anschließende Übertragung angewendet werden.

Gemäß Figur 4 enthält das CTS-Datenpaket des Empfängers die Bit-Loading-Tabelle. Darüber hinaus enthält es eine Bestätigungsinformation über die Verwendung einer spezifischen PHY-Erweiterung (PHY extension).

Das Datenpaket "Data" des Senders enthält die eigentlichen zu übertragenden Daten. Diese sind entsprechend der vom Empfänger erhaltenen Bit-Loading-Tabelle adaptiv moduliert. Zur Übertragung dieser Daten wird ein Übertragungsmodus mit der spezifischen PHY-Erweiterung gewählt.

Nach einer gewissen Wartezeit sendet der Empfänger das Bestätigungs-Datenpaket ACK, das Bestätigungsinformation über den korrekten oder unkorrekten Empfang des Datenpakets "Data" enthält.

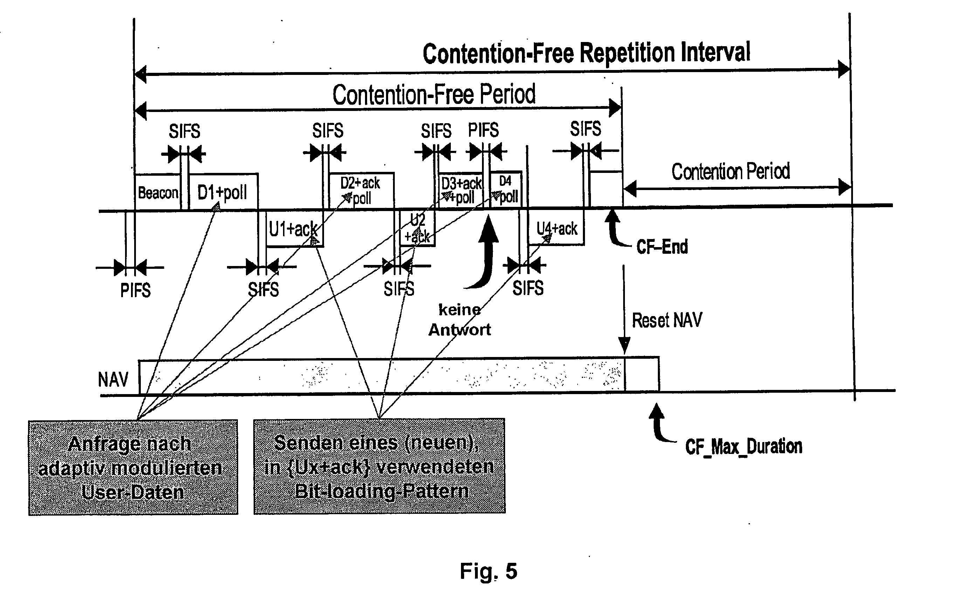

Figur 5 zeigt eine PCF-Datenübermittlung gemäß dem Standard IEEE 802.11, bei dem der Zugriff auf das Datennetz zentral koordiniert wird. Ein Übermittlungsintervall in diesem System wird als "Contention-Free Repetition Intervall" bezeichnet. Dieses Intervall besteht aus einer wettbewerbsfreien Periode (Contention-Free Period) und einer Periode (Contention Period), bei der hinsichtlich des Zugriffs einzelner Teilnehmer auf das Datennetz Wettbewerb stattfindet. In der wettbewerbsfreien Periode wird der Zugriff zentral geregelt, während in der Periode mit Wettbewerb der Zugriff dezentral koordiniert wird.

Nach einer Wartezeit PIFS (PCF Interframe Space) beginnt die Übermittlung durch ein Startsignal (Beacon) des Masters, der den Zugriff einer Gruppe von Teilnehmern auf das Datennetz zentral koordiniert. Dabei wird im zentral koordinierten Betriebsmodus eine Datenübertragung vom Master zu den Teilnehmern als Downlink (DL) und eine Datenübertragung von den Teilnehmern zum Master als Uplink (UL) bezeichnet. Nach einer kurzen Wartezeit SIFS sendet der Master an einen User X gemäß Fig. 5 Daten in einer Verbindung D1, wobei das "D" von "D1" den Downlink und "1" die Verbindung 1 zu User X kennzeichnet, mit einer polling-Anfrage, mit der der User X aufgefordert wird, Daten zu senden, sofern er dies wünscht. Nach ebenfalls einer kurzen Wartezeit SIFS sendet der User X seine Daten im Uplink U1, wobei das "U" von "U1" den Uplink und "1" die Verbindung 1 von User X kennzeichnet, mit einer Bestätigungsnachricht ack an den Master. Wiederum nach einer kurzen Wartezeit SIFS sendet der Master an einen User Y Daten in der Verbindung D2 mit einer polling-Nachricht für User Y. Gleichzeitig sendet der Master mit dieser Nachricht eine Bestätigung ack für User X, dass er die Daten in der Verbindung U1 korrekt empfangen hat. Anschließend erhält der Master vom U-ser Y Daten in der Verbindung U2 mit einer Bestätigung ack, dass die Daten in der Verbindung D2 beim User Y richtig angekommen sind.

Anschließend spricht der Master mit Daten in der Verbindung D3 einen User Z an, der nicht antwortet, und daraufhin einen User Z mit Daten in der Verbindung D4 sowie einer polling-Anfrage, wobei der Master keine Bestätigung ack an den User Z zu senden braucht, da dieser nicht geantwortet hat. Danach sendet der User W Daten in der Verbindung U4 mit einer Bestätigung ack, dass er die Daten in der Verbindung D4 vom Master korrekt empfangen hat. Dieser beispielhafte Datenaustausch in der wettbewerbsfreien Periode ändert mit dem Abschlusssignal CF-End des Masters. Daran anschließend findet die Contention Period statt, in der der Zugriff auf das Datennetz von jedem Teilnehmer selbst koordiniert, vorzugsweise im dezentral koordinierten DCF-Betriebsmodus, wird.

Die wettbewerbsfreie Zeit (Contention-Free Period) wird durch einen Vector NAV (Network Allocation Vector) gekennzeichnet. Während dieser Zeit beginnt keine der Stationen beziehungsweise keiner der Teilnehmer eine Übertragung auf dem Medium. Am Ende der wettbewerbsfreien Zeit wird der NAV-Vector zurückgesetzt (Reset NAV). Nach einer kurzen Verweildauer nach dem Rücksetzen endet die wettbewerbsfreie Zeit faktisch, so dass sich eine maximale wettbewerbsfreie Zeit CF_Max_Duration ergibt.

Dieses Datenübermittlungsschema wird erfindungsgemäß weiterverwendet, wobei die einzelnen Datenblöcke im Hinblick auf adaptive Modulation ergänzt werden. Die Signalisierung der für die adaptive Modulation notwendigen Bit-Loading-Tabellen ist in Figur 5 durch die dünnen Pfeile auf die jeweiligen Datenblöcke angedeutet. So findet bei jeder Datenübermittlung vom Master zu einem der User eine Anfrage nach adaptiv modulierten User-Daten statt. Diese Anfrage beinhaltet neben der impliziten oder expliziten Frage, ob die angesprochene Station zur adaptiven Modulation in der Lage ist, auch die Nachfrage nach einer konkret anzuwendenden Bit-Loading-Tabelle. Jeder angesprochene User sendet in seinem Datenpaket in den Verbindungen U1, U2 oder U4 jeweils die von ihm berechnete Bit-Loading-Tabelle und wendet diese bereits auf die jeweils zu übertragenden Daten in den Verbindungen U1, U2 und U4 an.

In dem Schaubild von Figur 5 wurde jeder der Teilnehmer (User X, User Y, User Z und User W) in der wettbewerbsfreien Zeit jeweils nur einmal vom Master angesprochen beziehungsweise gepollt. Damit sendet der Master seine Daten in den Verbindungen D1, D2, D3 und D4 mit fixer Modulation an die jeweiligen Teilnehmer. Falls jedoch ein Teilnehmer beziehungsweise User in einer wettbewerbsfreien Periode mehrfach von dem Master angesprochen wird und an den Master eine aktuelle Bit-Loading-Tabelle geschickt hat, so kann der Master ab der zweiten Übertragung an den.gleichen Teilnehmer die aktuelle Bit-Loading-Tabelle zur adaptiven Modulation anstelle der fixen Modulation verwenden.

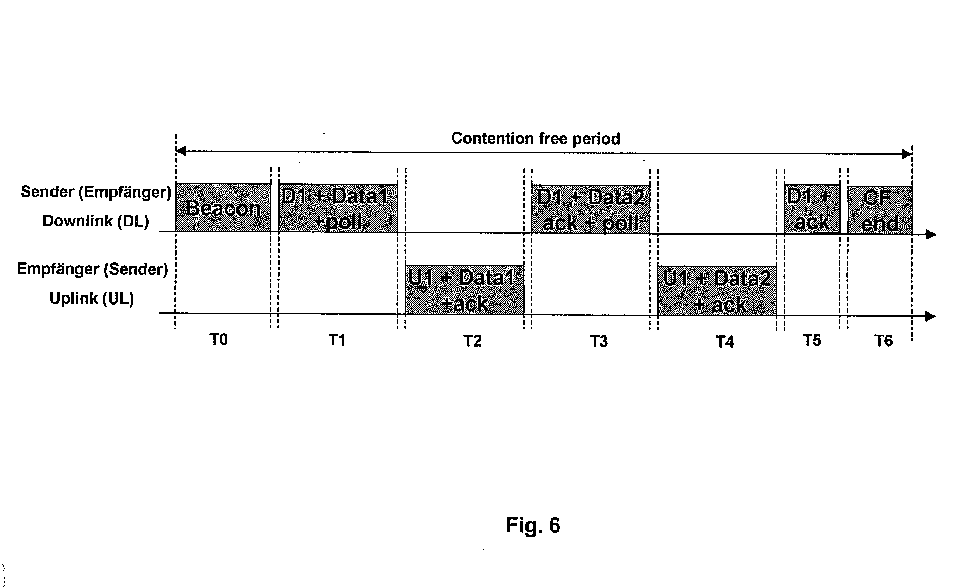

Ein derartiges CSMA-Schema mit adaptiver Modulation ist in Figur 6 dargestellt. In einem Zeitintervall T0 gibt der Sender beziehungsweise Master das Startsignal (Beacon) für die wettbewerbsfreie Periode (Contention-Free Period). Diese Periode endet mit dem Signal CF-End im Zeitintervall T6. Im Zeitintervall T1 überträgt der Master (Sender) in der Verbindung D1 Daten Data 1 an einen bestimmten Teilnehmer (Empfänger), den er mit der Polling-Nachricht poll anspricht. Gleichzeitig bittet der Master (Sender) um die Bit-Loading-Tabelle. Im Zeitintervall T2 wird die Bit-Loading-Tabelle vom Teilnehmer (Empfänger) zum Master (Sender) übermittelt, und es wird immer noch feste Modulation zur Übertragung der Daten Data 1 vom Teilnehmer (Empfänger) zum Master (Sender) verwendet. Dabei unterscheiden sich in der Regel die Daten Data 1 des Masters in der Verbindung D1 von den Daten Data 1 des Teilnehmers in der Verbindung U1. Mit der Bestätigungsinformation ack bestätigt der Teilnehmer (Empfänger) den Empfang der Daten Data 1 vom Master (Sender). Darüber hinaus bittet der Teilnehmer (Empfänger) um die Bit-Loading-Tabelle vom Master (Sender). Im Zeitintervall T3 übermittelt der Master (Sender) weitere Daten Data 2 unter Verwendung der im Zeitintervall T2 empfangenen Bit-Loading-Tabelle. Ferner übermittelt er die angefragte Bit-Loading-Tabelle an den Teilnehmer (Empfänger). Im Zeitintervall T4 sendet der Teilnehmer (Empfänger) seine Daten Data 2 unter Verwendung der im Zeitintervall T3 empfangenen Bit-Loading-Tabelle an den Master (Sender) .

Bei diesem Signalisierungsschema kann eine aktualisierte Bit-Loading-Tabelle entweder nur auf Anfrage oder bei jeder Datenübermittlung übertragen werden.

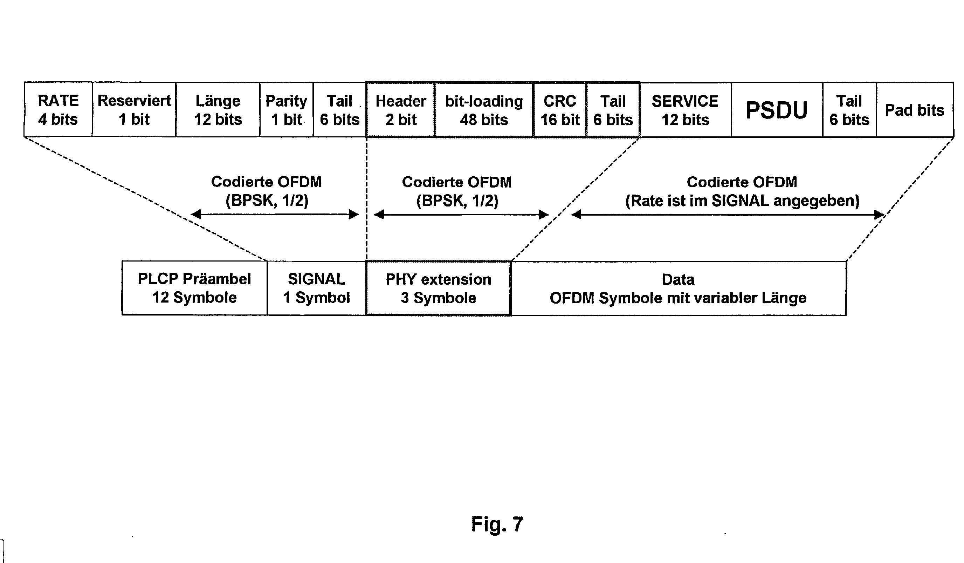

Figur 7 zeigt den Aufbau eines PLCP-Datenrahmens wie er innerhalb eines IEEE 802.11a spezifizierten OFDM-Systems verwendet werden kann. Dieser Datenrahmen wird als PPDU (PLCP Protocol Data Unit) bezeichnet, die auf dem PLCP-Protocol (Physical Layer Convergence Protocol) basiert. Die PPDU besitzt eine PLCP-Präambel mit zwölf Symbolen. Daran anschließend befindet sich ein einsymboliger Datenteil SIGNAL bestehend aus einer Datenrate RATE, einem reservierten Bit, einer Längenangabe, einem Paritätsbit und einem sogenannten Tail.

Erfindungsgemäß werden die anschließenden drei OFDM-Symbole, bestehend aus jeweils 24 Bits, für die adaptive Modulation beziehungsweise die Erweiterung der physikalischen Schicht (PHY extension) verwendet. Die drei Symbole setzen sich zusammen aus einem Header mit zwei Bits, der Bit-Loading-Information mit 48 Bits, einem zyklischen Redundanzcode CRC mit 16 Bits und einem Tail mit 16 Bits.

Anschließend an die drei Symbole für die adaptive Modulation befinden sich die eigentlichen, zu übertragenden Daten Data, die eine variable Länge mit unterschiedlich vielen OFDM-Symbolen besitzen. Der Data-Teil besitzt die bekannte Struktur mit zwölf Service-Bits, der PLCP-Service-Dateneinheit PSDU, dem Tail mit sechs Bits und einigen Pad-Bits.

Die Bestandteile der PPDU, die mit "SIGNAL", "PHY extension" und "Data" bezeichnet sind, werden mit kodiertem OFDM, im vorliegenden Fall BPSK, 1/2, übertragen. Die Rate für den Data-Teil wird in dem SIGNAL-Teil übertragen.

Somit lässt sich die adaptive Modulation einer PPDU durch Einfügen und Verwenden von nur drei OFDM-Symbolen, die einen Zeitbedarf von zwölf µs haben, in eine CTS-Nachricht gemäß der IEEE 802.11a-Spezifikation realisieren. Dabei kann das reservierte Bit oder das RATE-Feld das Feld für die adaptive Modulation (PHY extension Field) andeuten.

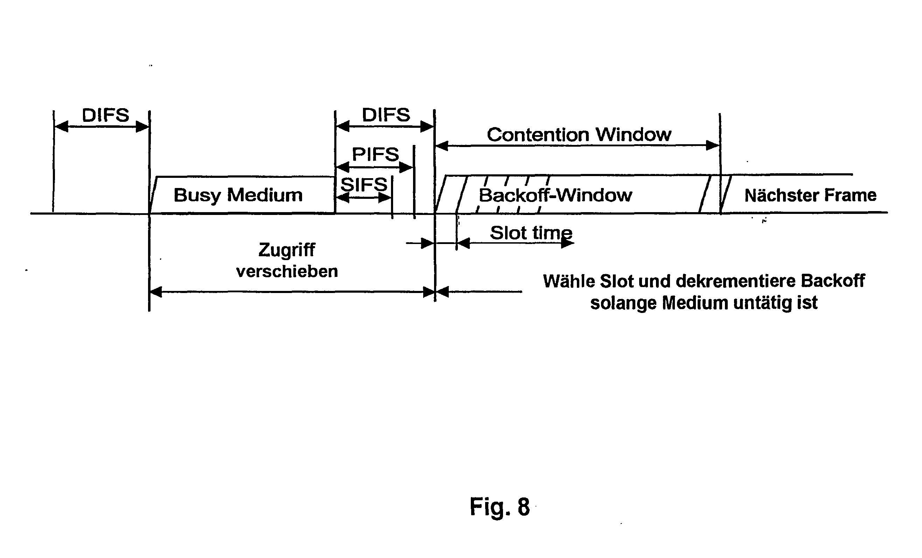

Figur 8 zeigt schließlich, dass die Backoff-Prozedur zur Vermeidung von Kollisionen, wie dies bereits in Figur 1 angedeutet ist, unverändert bleibt. Insbesondere bleiben alle DIFS-, PIFS- und SIFS-Zeitintervalle auch für die adaptive Modulation unverändert. So wird auch hier nach der Verschiebung des Zugriffs während der wettbewerbsfreien Zeit in dem Wettbewerbsfenster (Contention-Window) ein entsprechender Slot gewählt und der Backoff solange dekrementiert, solange das Medium untätig ist.

## Patentansprüche

1. Verfahren zum Senden von Datensignalen in einem Kommunikationssystem mit dezentral organisiertem Zugriff auf das Übertragungsmedium unter Verwendung mehrerer Übertragungsmodi, durch
Senden mindestens eines Pilotsignals vom Sender zum Empfänger,
Berechnen einer Zuordnungstabelle bezüglich der Übertragungsmodi anhand der empfangenen Pilotsignale durch den Empfänger,
Senden der Zuordnungstabelle vom Empfänger an den Sender und
Senden der Datensignale unter Anwenden eines der Übertragungsmodi gemäß der Zuordnungstabelle vom Sender zum Empfänger oder vom Empfänger zum Sender.

2. Verfahren nach Anspruch 1, wobei das Kommunikations system auf Grundlage des IEEE 802.11 spezifiziert ist.

3. Verfahren nach Anspruch 2, wobei die Pilotsignale in einer RTS-Nachricht übertragen werden.

4. Verfahren nach Anspruch 2 oder 3, wobei die Zuordnungstabelle eine Bitloading-Tabelle für adaptive Modulation und/oder Erweiterungsdaten für Erweiterungen der physikalischen Schicht, die über den Standard IEEE 802.11a oder andere Standards der physikalischen Schicht hinausreichen, umfasst.

5. Verfahren nach einem der Ansprüche 2 bis 4, wobei eine Anfrage vom Sender nach adaptiver Modulation und/oder nach Erweiterungen der physikalischen Schicht, die über den Standard IEEE 802.11a hinausreichen, in einer RTS-Nachricht erfolgt.

6. Verfahren nach einem der Ansprüche 2 bis 5, wobei eine Anfrage und/oder Bestätigung von dem Empfänger bezüglich adaptiver Modulation und/oder Erweiterungen der physikalischen Schicht, die über den Standard IEEE 802.11a hinausgehen, in einer CTS-Nachricht übertragen werden.

7. Verfahren nach einem der Ansprüche 2 bis 6, wobei die vom Empfänger ermittelte Zuordnungstabelle in einer CTS-Nachricht übertragen wird.

8. Verfahren nach einem der Ansprüche 2 bis 7, wobei das Kommunikationssystem zumindest zwei Endgeräte aufweist, welche sowohl Sende- als auch Empfangsfunktionalität beinhalten und eine Zuordnungstabelle von einem dieser beiden Endgeräte zum anderen Endgerät oder umgekehrt übertragen wird.

9. Verfahren nach Anspruch 8, wobei die Zuordnungstabelle in einem Datenübermittlungspaket angewendet wird.

10. Verfahren nach einem der Ansprüche 2 bis 9, wobei zur Übertragung der Zuordnungstabelle mindestens ein Datensymbol verwendet wird.

11. Verfahren nach Anspruch 10, wobei zur Übertragung drei Datensymbolen bestehend aus jeweils 24 Bits verwendet werden.

12. Verfahren nach einem der Ansprüche 2 bis 11, wobei die Verwendung einer spezifischen Erweiterung der physikalischen Schicht, die über den Standard IEEE 802.11a hinausgeht, in einem CTS-Nachricht bestätigt wird.

13. Verfahren zum Senden von Datensignalen in einem Kommunikationssystem mit zentral organisiertem Zugriff auf das Übertragungsmedium unter Verwendung mehrerer Übertragungsmodi, durch
Senden mindestens eines Pilotsignals vom Sender zum Empfänger,
Berechnen einer Zuordnungstabelle bezüglich der Übertragungsmodi anhand der empfangenen Pilotsignale durch den Empfänger,
Senden der Zuordnungstabelle vom Empfänger an den Sender und
Senden der Datensignale unter Anwenden der in der Zuordnungstabelle übermittelten Übertragungsmodi gemäß der Zuordnungstabelle vom Empfänger zum Sender.

14. Verfahren nach Anspruch 13, wobei zu sendende Daten mit einem festen Modulationsschema moduliert werden, solange keine Zuordnungstabelle bezüglich der Übertragungsmodi vorliegt.

15. Verfahren nach Anspruch 13 oder 14, wobei die Zuordnungstabelle eine Bitloading-Tabelle für adaptive Modulation und/oder Erweiterungsdaten für Erweiterungen der physikalischen Schicht, die über den Standard IEEE 802.11a oder andere Standards der physikalischen Schicht hinausreichen, umfasst.

16. Verfahren nach einem der Ansprüche 1 bis 15, wobei das Kommunikationssystem ein Vielfachzugriffsystem ist.

17. Verfahren nach dem vorhergehenden Anspruch, wobei das Vielfachzugriffssystem als ein CSMA-System funktioniert.

18. Verfahren nach dem vorhergehenden Anspruch, wobei das CSMA-System nach dem IEEE802.11 Standard ist.

## Claims

1. Method for transmitting data signals in a communication system with access organized on a distributed basis to the access medium using a plurality of transmission modes, by
transmitting at least one pilot signal from the transmitter to the receiver,
calculating an assignment table in respect of the transmission modes using the received pilot signals by the receiver,
transmitting the assignment table from the receiver to the transmitter, and
transmitting the data signals using one of the transmission modes in accordance with the assignment table from the transmitter to the receiver or from the receiver to the transmitter.

2. Method according to claim 1, wherein the communication system is specified in accordance with IEEE 802.11.

3. Method according to claim 2, wherein the pilot signals are transmitted in an RTS message.

4. Method according to claim 2 or 3, wherein the assignment table includes a bit loading table for adaptive modulation and/or expansion data for expansions of the physical layer which extend beyond Standard IEEE 802.11 a or other Standards of physical layer.

5. Method according to claims 2 to 4, wherein a request from the transmitter for adaptive modulation and/or for expansions of the physical layer which extend beyond Standard IEEE 802.11 a is made in an RTS message.

6. Method according to claims 2 to 5, wherein a request and/or acknowledgement from the receiver in respect of adaptive modulation and/or expansions of the physical layer which extend beyond Standard 802.11a are transmitted in a CTS message.

7. Method according to claim 2 to 6, wherein the assignment table determined by the receiver is transmitted in a CTS message.

8. Method according to claims 2 to 7, wherein the communication system includes at least two terminals which include both transmitter and receiver functionality and an assignment table is transmitted from either of the terminals to the other terminal or vice versa.

9. Method according to claim 8, wherein the assignment table is employed in a transmitted data packet.

10. Method according to claims 2 to 9, wherein for the transmission of the assignment table at least one data symbol is used.

11. Method according to claim 10, wherein for transmission three data symbols are used each consisting of 24 bits.

12. Method according to claim 2 to 11, wherein use of a specific expansion of the physical layer which extends beyond Standard IEEE 802.11 a is confirmed in a CTS message.

13. Method for transmitting data signals in a communication system with access organized on a centralized basis to an access medium using a plurality of transmission modes, by
transmitting at least one pilot signal from the transmitter to the receiver,
calculation of an assignment table in respect of the transmission modes on the basis of pilot signals by the receiver,
transmitting the assignment table from the receiver to the transmitter, and
transmitting the data signals using the transmission modes transferred in the assignment table in accordance with the assignment table from the receiver to the transmitter.

14. Method according to claim 13, wherein the data to be transmitted is modulated with a fixed modulation scheme provided there is no assignment table present in respect of the transmission modes.

15. Method according to claim 13 or 14, wherein the assignment table includes a bit loading table for adaptive modulation and/or expansion data for expansions of the physical layer which extend beyond Standard IEEE 802.11a or other Standards of the physical layer.

16. Method according to claims 1 to 15, wherein the communication system is a multiple access system.

17. Method according to the previous claim, wherein the multiple access system operates as a CSMA system.

18. Method according to the previous claim, wherein the CSMA system is in accordance with Standard IEEE 802.11.

## Revendications

1. Procédé d'émission de signaux de données dans un système de communication avec accès à organisation décentralisée au moyen de transmission en utilisant plusieurs modes de transmission, **caractérisé en ce que**:
- au moins un signal pilote est émis par l'émetteur vers le récepteur,
- un tableau d'association concernant les modes de transmission à l'aide des signaux pilotes reçus est calculé par le récepteur,
- le tableau d'association est émis par le récepteur vers l'émetteur et
- les signaux de données en utilisant l'un des modes de transmission selon le tableau d'association sont émis par l'émetteur vers le récepteur ou par le récepteur vers l'émetteur.

2. Procédé selon la revendication 1, selon lequel le système de communication est spécifié sur la base de la norme IEEE 802.11.

3. Procédé selon la revendication 2, selon lequel les signaux pilotes sont transmis dans un message RTS.

4. Procédé selon la revendication 2 ou 3, selon lequel le tableau d'association comprend un tableau de chargement de bits pour une modulation adaptative et/ou pour des données d'extension en vue d'extensions de la couche physique qui vont au-delà de là norme IEEE 802.11a ou d'autres normes de la couche physique.

5. Procédé selon l'une des revendications 2 à 4, selon lequel une demande présentée par l'émetteur pour une modulation adaptative et/ou pour des extensions de la couche physique qui vont au-delà de la norme IEEE 802.11a est effectuée dans un message RTS.

6. Procédé selon l'une des revendications 2 à 5, selon lequel une demande et/ou une confirmation effectuée par le récepteur concernant une modulation adaptative et/ou des extensions de la couche physique qui vont au-delà de la norme IEEE 802.11a sont transmises dans un message CTS.

7. Procédé selon l'une des revendications 2 à 6, selon lequel le tableau d'association déterminé par le récepteur est transmis dans un message CTS.

8. Procédé selon l'une des revendications 2 à 7, selon lequel le système de communication comporte au moins deux terminaux qui contiennent aussi bien la fonctionnalité d'émission que la fonctionnalité de réception et selon lequel un tableau d'association est transmis par l'un de ces deux terminaux vers l'autre terminal ou inversement.

9. Procédé selon la revendication 8, selon lequel le tableau d'association est utilisé dans un paquet de transmission de données.

10. Procédé selon l'une des revendications 2 à 9, selon lequel au moins un symbole de données est utilisé pour la transmission du tableau d'association.

11. Procédé selon la revendication 10, selon lequel trois symboles de données constitués de 24 bits chacun sont utilisés pour la transmission.

12. Procédé selon l'une des revendications 2 à 11, selon lequel l'utilisation d'une extension spécifique de la couche physique qui va au-delà de la norme IEEE 802.11a est confirmée dans un message CTS.

13. Procédé d'émission de signaux de données dans un système de communication avec accès à organisation centralisée au moyen de transmission en utilisant plusieurs modes de transmission, **caractérisé en ce que** :
- au moins un signal pilote est émis par l'émetteur vers le récepteur,
- un tableau d'association concernant les modes de transmission à l'aide des signaux pilotes reçus est calculé par le récepteur,
- le tableau d'association est émis par le récepteur vers l'émetteur, et
- les signaux de données en utilisant les modes de transmission transmis dans le tableau de transmission sont émis selon le tableau d'association par lé récepteur vers l'émetteur.

14. Procédé selon la revendication 13, selon lequel des données à émettre sont modulées avec un schéma de modulation fixe tant qu'il n'y a pas de tableau d'association concernant les modes de transmission.

15. Procédé selon la revendication 13 ou 14, selon lequel le tableau d'association comprend un tableau de chargement de bits pour une modulation adaptative et/ou pour des données d'extension en vue d'extensions de la couche physique qui vont au-delà de la norme IEEE 802.11a ou d'autres normes de la couche physique.

16. Procédé selon l'une des revendications 1 à 15, selon lequel le système de communication est un système à accès multiple.

17. Procédé selon la revendication précédente, selon lequel le système à accès multiple fonctionne comme un système CSMA.

18. Procédé selon la revendication précédente, selon lequel le système CSMA est conforme à la norme IEEE 802.11.
